# EUROPÄISCHE PATENTSCHRIFT

(11) **EP 0 640 520 B1**
(45) Veröffentlichungstag und Bekanntmachung des Hinweises auf die Patenterteilung: **27.11.1996**
(21) Anmeldenummer: 94104082.6
(22) Anmeldetag: 16.03.1994
(51) Int. Cl.: B61H 7/08

(54) **Wirbelstrom-Schienenbremsmagnet**
Eddy current-rail brake magnet
Aimant de frein pour frein de rail à courants de Foucault

(30) Priorität: 30.08.1993 DE 4329160
(43) Veröffentlichungstag der Anmeldung: 01.03.1995
(73) Patentinhaber: KNORR-BREMSE AG, 80809 München (DE)
(72) Erfinder: Kröger, Uwe, D-80993 München (DE); Saumweber, Eckart, Dr., D-82131 Gauting (DE)

(56) Entgegenhaltungen:
- DE-A- 2 638 133
- DE-C- 811 961

## Beschreibung

Die Erfindung betrifft einen Wirbelstrom-Schienenbremsmagnet für Schienenfahrzeuge, mit der in Querrichtung profilierten Schienenoberfläche zugewandter, im Betriebszustand dieser mit einem Luftspalt gegenüberstehender, in Schienenlängs- und -querrichtung starrer Polfläche mit in Schienenlängsrichtung abwechselnder Magnetpolarität.

Derartige Wirbelstrom-Schienenbremsmagnete sind vielfach bekannt, beispielsweise aus der DE- OS 2 035 781. Allen diesen bekannten Wirbelstrom-Schienenbremsmagneten ist gemeinsam, daß die Polfläche des Wirbelstrom-Schienenbremsmagneten als horizontale, zumindest im wesentlichen ebene Fläche ausgebildet ist. Da in Abweichung zur Darstellung in der erwähnten DE-OS die Schienenoberfläche in Querrichtung konvex profiliert ausgebildet ist, ergibt sich hierbei zwischen der Polfläche des Wirbelstrom-Schienenbremsmagneten und der Schienenoberfläche ein Luftspalt unterschiedlicher Stärke, wobei dieser Luftspalt an seiner engsten Stelle derart zu bemessen ist, daß im Fahrbetrieb ein Aufsetzen des Wirbestrom-Schienenbremsmagneten auf die Schiene mit Sicherheit vermieden wird.

Für reine, ohne Wirbelstromeffekt wirkende Schienenbremsmagnete ist es beispielsweise aus der DE-PS 971 289 bekannt, die Sohle des Schienenbremsmagneten dem Profil der Schienenoberfläche zumindest annähernd angepaßt auszubilden; eine derartige Ausbildung ergäbe sich bei diesen im Betriebszustand mit großer Kraft auf der Schienenoberfläche aufsitzenden Schienenbremsmagneten nach einiger Betriebszeit durch entsprechenden Verschleiß an der Polfläche des Schienenbremsmagneten auch von selbst. Da jedoch auch das Profil der Schienenoberfläche durch Verschleiß variieren kann und zudem in Kuvenabschnitten der Fahrstrecke über die Längsrichtung des Schienenbremsmagneten in unterschiedliche Querpositionen zu diesem gelangt, ist bei derartigen, über ihre Länge starr ausgebildeten Schienenbremsmagneten kein sattes Aufliegen der Polfläche auf der Schienenoberfläche gewährleistet, wodurch sich Bremswirkungsverluste ergeben können. Zum Vermeiden dieses Mangels ist es aus der DE-PS 702 166 des weiteren bekannt, den ohne Wirbelstromeffekt wirkenden Schienenbremsmagneten an seiner Polfläche in einzelne Pakete aufzugliedern, wobei jedes Paket aus einer Vielzahl von vertikalen, in Schienenlängsrichtung verlaufenden, nebeneinander angeordneten Einzelblechen besteht. Die Einzelbleche können sich dann jeweils dem Profil der Schienenoberfläche durch entsprechende Verschiebung anpassen, ein derartiger Schienenbremsmagnet ist jedoch in seinem Aufbau und seiner Wartung teuer und es ist zu erwarten, daß er relativ hohe, innere magnetische Widerstände aufweist, wodurch er einen, bezogen auf die erzielbare Bremswirkung, schlechten Wirkungsgrad erhält.

Es ist Aufgabe der Erfindung, einen Wirbelstrom-Schienenbremsmagneten der eingangs angegebenen Art mit einfachen Mitteln derart auszugestalten, daß er im Vergleich zu bisher bekannten Wirbelstrom-Schienenbremsmagneten eine höhere Bremswirkung erzielt und einen demgemäß verbesserten Wirkungsgrad aufweist.

Diese Aufgabe wird nach der Erfindung dadurch gelöst, daß die Polfläche vertkal oberhalb der Schienenoberfläche ein deren Profil zumindest angenähert entsprechendes Querprofil aufweist.

Dabei kann es nach der weiteren Erfindung bei Wirbelstrom-Schienenbremsmagneten, welche beispielsweise infolge des Spurkranzspieles der Radsätze des Schienenfahrzeuges zur Schiene relativ zur Schienenoberfläche begrenzt querverschieblich sind, zweckmäßig sein, wenn im Betriebszustand des Wirbelstrom-Schienenbremsmagneten das Querprofil der Polflache dem Profil der Schienenoberfläche im ganzen Bereich der Querverschieblichkeit zwischen beiden unter Berücksichtigung der größtmöglichen Schienenkrümmung in Bogenabschnitten der Fahrstrecke des Schienenfahrzeuges berührungsfrei gegenübersteht.

Dabei kann es nach der weiteren Erfindung zweckmäßig sein, wenn im Betriebszustand das Querprofil der Polfläche dem Profil der Schienenoberfläche an jeder Stelle mit einem Mindestabstand von ca. 3mm bis 8mm, vorzugsweise von ca. 5mm gegenübersteht.

Hierzu ist es nach der weiteren Erfindung zweckmäßig und vorteilhaft, wenn das Querprofil der Polfläche zumindest annähernd einer Hüllkurve entspricht, die aus der Schienenoberfläche unter Berücksichtigung deren Längskrümmung in Kurvenabschnitten bei deren Ralativquerverschiebung zum Querprofil gebildet wird.

Nach der weiteren Erfindung zweckmäßige Weiterbildungsmöglichkeiten eines derartigen Wirbelstrom-Schienenbremsmagneten sind den weiteren Unteransprüchen entnehmbar.

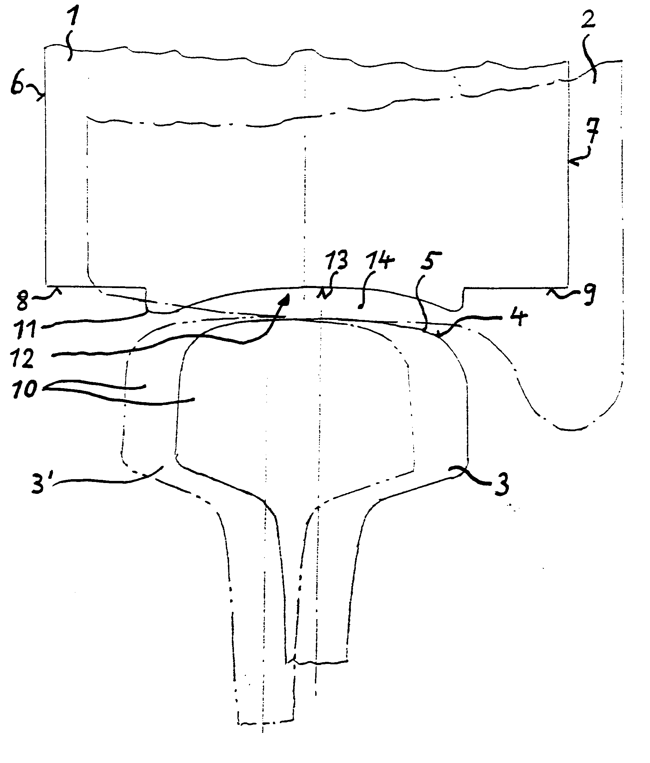

In der Zeichnung ist in schematischer Darstellung ein Ausführungsbeispiel für einen nach der Erfindung ausgebildeten Wirbelstrom-Schienenbremsmagneten dargestellt, wobei der Übersichtlichkeit halber auf die Schraffierung geschnittener Teile verzichtet wurde.

In der eine Stirnansicht in Schienenlängsrichtung bzw. einen Schnitt quer hierzu darstellenden Figur ist mit durchgehenden Linien der untere Teil eines Wirbelstrom-Schienenbremsmagneten 1 dargestellt, mit strichpunktierter Linie ist der Umriß eines Schienenfahrzeugrades 2 angedeutet und mit wiederum durchgehender Linie ist der Querschnitt des oberen Teiles einer Schiene 3 dargestellt, auf welcher das Schienenfahrzeugrad 2 aufsteht und mit welcher der Wirbelstrom-Schienenbremsmagnet 1 zusammenzuwirken vermag. Relativ zum Wirbelstrom-Schienenbremsmagneten 1 und zum Schienenfahrzeugrad 2 vermag die Schiene 3 sich seitlich bis zur Lage der mit Strichdoppelpunkt-Linie eingezeichneten Schiene 3' zu versetzen. Die Schiene 3, 3' weist an ihrer Schienenoberfläche 4 quer zu ihrer Längsrichtung ein Profil 5 auf, welches in üblicher bzw. vorgeschriebener Weise konvex gekrümmt ist.

Der Wirbelstrom-Schienenbremsmagnet 1 weist an seiner Unterseite beidseitig an seine vertikalen Seitenflächen 6 bzw. 7 anschließende, im wesentlichen horizontal verlaufende und ebene Flächenabschnitte 8 bzw. 9 auf, welche sich im wesentlichen seitlich des Kopfbereiches 10 der Schiene 3, 3' befinden. Die Flächenabschnitte 8 und 9 schließen zwischen sich einen großenteils relatv zu ihnen vertikal abwärts versetzten Abschnitt 11 der aus diesem und den beiden Flächenabschnitten 8 und 9 gebildeten Polfläche 12 des Wirbelstrom-Schienenbremsmagneten 1 ein. Der Abschnitt 11 bildet oberhalb des Profiles 5 ein konkav geformtes Querprofil 13, welches in seiner Form zumindest annähernd dem Profil 5 der Schienenoberfläche 4 entspricht und im Betriebszustand des Wirbelstrom-Schienenbremsmagneten 1 dem Profil 5 mit einem Luftspalt 14 gegenübersteht. Dabei ist zu beachten, daß das Querprofil 13 die Schienenoberfläche 4 in keiner Relativlage der Schiene 3, 3' im Bereich deren Relativ-Querverschieblicheit zum Wirbelstrom-Schienenbremsmagneten 1 berührt, sondern daß zwischen beiden an jeder Stelle immer ein Luftspalt 14 vorhanden ist. Hierbei ist zu berücksichtigen, daß in Bogenabschnitten der Fahrstrecke die Schienenoberfläche 4 in Schienenlängsrichtung gekrümmt verläuft, auch bei größtmöglicher Schienenkrümmung in den Bogenabschnitten der Fahrstrecke tritt keine Berührung zwischen dem Querprofil 13 bzw. dem Abschnitt 11 der Polfläche 12 und der Schienenoberfläche 4 auf. In unbetätigtem Zustand des Wirbelstrom-Schienenbremsmagneten 1 kann dieser in eine vertikal höhere Lage angehoben sein, so daß in diesem Zustand ebenfalls keinerlei Gefahr einer Berührung zwischen Wirbelstrom-Schienenbremsmagneten 1 und Schiene 3, 3' besteht.

Abweichend zum dargestellten Ausführungsbeispiel kann der das Querprofil 13 tragende Abschnitt 11 der Polfläche 12 sich im wesentlichen auch in einer mit den Flächenabschnitten 8, 9 fluchtenden Horizontalfläche bzw. etwas vertikal nach oben zu dieser versetzt befinden. Bei schmaler Ausführung des Spulenkörpers des Wirbelstrom-Schienenbremsmagneten ist es weiterhin möglich, daß der Abschnitt 11 unter Entfall der Flächenabschnitte 8 und/oder 9 unmittelbar an wenigstens eine der Seitenflächen 6, 7 anschließt

Durch die erfindungsgemäße Ausbildung der Polfläche 12 des Wirbelstrom-Schienenbremsmagneten 1 mit einer im wesentlichen dem Profil 5 der Schienenoberfläche 4 angepaßten Querprofil 13 ergibt sich ein hinsichtlich des praktischen Betriebes minimierter Luftspalt 14, wodurch eine wesentlich höhere Bremswirkung gegenüber den bisher üblichen Wirbelstrom-Schienenbremsmagneten mit durchgehend ebener Polfläche, also ein entsprechend gesteigerter Wirkungsgrad, erreicht wird; die Bremswirkung kann durch die erfindungsgemäße Ausbildung um über 10% gesteigert werden.

### Kurzfassung:

Der Wirbelstrom-Schienenbremsmagnet (1) ist an seiner seine Unterseite bildenden, durchgehend starr ausgebildeten Polfläche (12) im Bereich vertikal oberhalb der Schienenoberfläche (4) mit einem deren Profil (5) zumindest angenähert entsprechenden Querprofil (13) versehen. Das Querprofil (13) ist dabei derart ausgebildet, daß im Betriebszustand des Wirbelstrom-Schienenbremsmagneten dessen Polfläche (12) und die Schienenoberfläche (4) sich unter Berücksichtigung einer Querverschieblichkeit zwischen diesen beiden Flächen sowie unter Berücksichtigung der größtmöglichen Schienenkrümmung in Bogenabschnitten der Fahrstrecke berührungsfrei mit einem Mindestabstand von ca. 5mm bei insgesammt geringstmöglichem Luftspalt (14) gegenüberstehen. Das Querprofil (13) ist hierzu zweckmäßig als Hüllkurve für die Schienenoberfläche (4) unter Berücksichtigung der erwähnten Querverschieblichkeit und größtmöglichen Schienenkrümmung ausgebildet.

Durch Minimieren des Luftspaltes (14) vermittels des Querprofiles (13) ist eine wesentliche Steigerung der Bremswirkung des Wirbelstrom-Schienenbremsmagneten (1) im Vergleich zu bisher üblichen Wirbelstrom-Schienenbremsmagneten mit ebenen Polflächen erreichbar.

### Bezugszeichenliste

- 1: Wirbelstrom-Schienenbremsmagnet
- 2: Schienenfahrzeugrad
- 3, 3': Schiene
- 4: Schienenoberfläche
- 5: Profil
- 6: Seitenfläche
- 7: Seitenfläche
- 8: Flächenabschnitt
- 9: Flächenabschnitt
- 10: Kopfbereich
- 11: Abschnitt
- 12: Polfläche
- 13: Querprofil
- 14: Luftspalt

## Patentansprüche

1. Wirbelstrom-Schienenbremsmagnet (1) für Schienenfahrzeuge, mit der in Querrichtung profilierten Schienenoberfläche (4) zugewandter, im Betriebszustand dieser mit einem Luftspalt (14) gegenüberstehender, in Schienenlängs- und -querrichtung starrer Polfläche (12) mit in Schienenlängsrichtung abwechselnder Magnetpolarität, dadurch gekennzeichnet, daß die Polfläche (12) vertikal oberhalb der Schienenoberfläche (4) ein deren Profil (5) zumindest angenähert entsprechendes Querprofil (13) aufweist.

2. Wirbelstrom-Schienenbremsmagnet nach Anspruch 1, wobei der Wirbelstrom-Schienenbremsmagnet (1) relativ zur Schienenoberfläche (4) begrenzt querverschieblich ist, dadurch gekennzeichnet, daß im Betriebszustand das Querprofil (13) der Polflache (12) dem Profil (5) der Schienenoberfläche (4) im ganzen Bereich der Querverschieblichkeit unter Berücksichtigung der größtmöglichen Schienenkrümmung in Bogenabschnitten der Fahrstrecke des Schienenfahrzeuges berührungsfrei gegenübersteht.

3. Wirbelstrom-Schienenbremsmagnet nach Anspruch 2, dadurch gekennzeichnet, daß im Betriebszustand das Querprofil (13) der Polfläche (12) der Schienenoberfläche (4) an jeder Stelle mit einem Mindestabstand von ca. 3mm bis 8mm gegenübersteht.

4. Wirbelstrom-Schienenbremsmagnet nach Anspruch 3, dadurch gekennzeichnet, daß der Mindestabstand ca. 5mm beträgt.

5. Wirbelstrom-Schienenbremsmagnet nach Anspruch 2, 3 oder 4, dadurch gekennzeichnet, daß das Querprofil (13) der Profilfläche (12) zumindest annähernd einer Hüllkurve entspricht, die aus der Schienenoberfläche (4) unter Berücksichtigung deren Längskrümmung in Kurvenabschnitten bei Relativ-Querverschiebung der Schienenoberfläche (4) zum Querprofil (13) gebildet wird.

6. Wirbelstrom-Schienenbremsmagnet nach einem oder mehreren der vorstehenden Ansprüche, dadurch gekennzeichnet, daß die Polfläche (12) zumindest zu einer Seite des Querprofils (13) einen zumindest annähernd horizontal auskragenden, ebenen Flächenabschnitt (8; 9) aufweist.

7. Wirbelstrom-Schienenbremsmagnet nach Anspruch 6, dadurch gekennzeichnet, daß das Querprfil (13) sich zumindest teilweise an einem relativ zum ebenen Flächenabschnitt (8; 9) vertikal abwärts versetzten Abschnitt (11) der Polfläche (12) befindet.

8. Wirbelstrom-Schienenbremsmagnet nach Anspruch 6, dadurch gekennzeichnet, daß das Querprofil sich zumindest teilweise an einem relativ zum ebenen Flächenabschnitt vertikal nach oben versetzten Abschnitt der Polfläche befindet.

## Claims

1. Eddy current rail brake magnet (1) for rail vehicles, with its pole surface (12) rigid in the longitudinal and transverse directions of the rails, facing the transversely profiled rail surface (4) and being opposite the latter with an air gap (14) in the operational state, having an alternating magnetic polarity in the longitudinal direction of the rail, characterised in that, vertically above the rail surface (4), the pole surface (12) has a transverse profile (13) corresponding at least approximately to the profile (5) of the rail.

2. Eddy current rail brake magnet according to claim 1, in which the eddy current rail brake magnet (1) is transversely displaceable relative to the rail surface (4) in a fashion, characterised in that in the operational state the cross-section (13) of the pole surface (12) is opposite the profile (5) of the rail surface (4) without contact over the whole region of the transversely displaceability taking into account the largest possible rail curvature in curved sections of the range of travel of the rail vehicle.

3. Eddy current rail brake magnet according to claim 2, characterised in that in the operational state the transverse profile (13) of the pole surface (12) is opposite the rail surface (4) at every point with a minimum distance of ca. 3mm to 8mm.

4. Eddy current rail brake magnet according to claim 3, characterised in that the minimum distance is ca. 5mm.

5. Eddy current rail brake magnet according to claim 2, 3 or 4, characterised in that the transverse profile (13) of the profile surface (12) corresponds at least approximately to an envelope curve formed by the rail surface (4) with respect to its longitudinal curvature in curved sections with relative transverse motion of the rail surface (4) with respect to the cross-section (13).

6. Eddy current rail brake magnet according to one or more of the previous claims, characterised in that the pole surface (12) has a flat surface section (8; 9) which juts out at least approximately horizontally, on at least one side of the transverse profile (13).

7. Eddy current rail brake magnet according to claim 6, characterised in that the transverse profile (13) is situated as least partially on a section (11) of the pole surface (12) which is offset vertically downwards relative to the level surface section (8; 9).

8. Eddy current rail brake magnet in accordance with claim 6, characterised in that the cross-section is situated at least partially on a section of the pole surface which is offset vertically upwards relative to the level surface section.

## Revendications

1. Aimant de frein sur rail à courants de Foucault (1) destiné à des véhicules sur rails, présentant une surface polaire (12), qui est dirigée vers la surface supérieure (4) du rail profilée en direction transversale, qui est en regard de celle-ci avec un entrefer (14) dans l'état de fonctionnement, et qui est rigide dans la direction longitudinale et la direction transversale du rail, cette surface polaire présentant des polarités magnétiques alternées dans la direction longitudinale du rail, caractérisé en ce que la surface polaire (12) présente, verticalement au-dessus de la surface supérieure (4) du rail, un profil transversal (13) correspondant au moins approximativement au profil (5) de cette dernière.

2. Aimant de frein sur rail à courants de Foucault selon la revendication 1, l'aimant de frein sur rail à courants de Foucault (1) pouvant coulisser transversalement de manière limitée, par rapport à la surface supérieure (4) du rail, caractérisé en ce que, dans l'état de fonctionnement, le profil transversal (13) de la surface polaire (12) est en regard du profil (5) de la surface supérieure (4) du rail, sans contact dans toute la plage de la course de coulissement transversal, en tenant compte de la plus grande courbure possible du rail dans les tronçons courbes de la voie de circulation du véhicule sur rails.

3. Aimant de frein sur rail à courants de Foucault selon la revendication 2, caractérisé en ce que, dans l'état de fonctionnement, le profil transversal (13) de la surface polaire (12) se tient en regard de la surface supérieure (4) du rail, avec un intervalle minimal d'environ 3 mm à 8 mm en tout point.

4. Aimant de frein sur rail à courants de Foucault selon la revendication 3, caractérisé en ce que l'intervalle minimal est égal à 5 mm environ.

5. Aimant de frein sur rail à courants de Foucault selon la revendication 2, 3 ou 4, caractérisé en ce que le profil transversal (13) de la surface polaire (12) correspond, au moins approximativement, à une courbe enveloppe qui est formée à partir de la surface supérieure (4) du rail en tenant compte de sa courbure longitudinale dans les tronçons courbes, lors d'un coulissement transversal relatif de la surface supérieure (4) du rail par rapport au profil transversal (13).

6. Aimant de frein sur rail à courants de Foucault selon une ou plusieurs des revendications précédentes, caractérisé en ce que la surface polaire (12) présente, au moins d'un côté du profil transversal (13), un tronçon de surface plan (8 ; 9), faisant saillie horizontalement, au moins approximativement.

7. Aimant de frein sur rail à courants de Foucault selon la revendication 6, caractérisé en ce que le profil transversal (13) se trouve, au moins en partie, sur un tronçon (11) de la surface polaire (12), décalé verticalement vers le bas par rapport au tronçon de surface plan (8 ; 9).

8. Aimant de frein sur rail à courants de Foucault selon la revendication 6, caractérisé en ce que le profil transversal se trouve, au moins en partie, sur un tronçon de la surface polaire, décalé verticalement vers le haut par rapport au tronçon de surface plan.
